# EUROPÄISCHE PATENTSCHRIFT

(11) **EP 2 356 400 B1**
(45) Veröffentlichungstag und Bekanntmachung des Hinweises auf die Patenterteilung: **16.07.2014**
(21) Anmeldenummer: 10805394.3
(22) Anmeldetag: 22.11.2010
(51) Int. Cl.: G01B 5/00, G01B 21/04, G01D 3/036, G05B 19/404, B25J 9/16, B25J 19/02

(54) **ROBOTER ZUR AUTOMATISCHEN 3D-VERMESSUNG UND VERFAHREN**
ROBOT FOR AUTOMATIC 3-D MEASUREMENT AND METHOD
ROBOT DE MESURE TRIDIMENSIONNELLE AUTOMATIQUE ET PROCÉDÉ ASSOCIÉ

(30) Priorität: 20.11.2009 DE 102009053874
(43) Veröffentlichungstag der Anmeldung: 17.08.2011
(73) Patentinhaber: Micro-Epsilon Messtechnik GmbH & Co. KG, 94496 Ortenburg (DE)
(72) Erfinder: SONNTAG, Achim, 94113 Tiefenbach (DE); HAEUSLER, Kurt, 4400 Steyr (AT)
(74) Vertreter: Ullrich & Naumann
(86) Internationale Anmeldenummer: PCT/DE2010/001352
(87) Internationale Veröffentlichungsnummer: WO 2011/060769

(56) Entgegenhaltungen:
- EP-A1- 1 574 817
- EP-A2- 1 043 642
- DE-A1- 19 931 676
- DE-A1-102005 028 788
- DE-A1-102008 006 927
- DE-A1-102008 022 230

## Beschreibung

Die Erfindung betrifft einen Roboter zur automatischen 3D-Vermessung beliebiger Körper, insbesondere zur Ermittlung geometrischer Maße eines Körpers, mit einer Sensorik, wobei zur Bewegung des Körpers relativ zu der Sensorik der Roboter und/oder ein beweglicher Messarm, Messausleger oder dgl., der den Körper trägt, eine Bahn beschreibt.

Ebenso betrifft die Erfindung einen Roboter zur automatischen 3D-Vermessung beliebiger Körper, insbesondere zur Ermittlung geometrischer Maße eines Körpers, mit einer vom Roboter getragenen Sensorik, wobei zur Bewegung der Sensorik relativ zu dem Körper der Roboter und/oder ein beweglicher Messarm, Messausleger oder dgl., der die Sensorik trägt, eine Bahn beschreibt.

Des Weiteren betrifft die Erfindung ein Verfahren zur automatischen 3D-Vermessung beliebiger Körper mittels Roboter, insbesondere zur Ermittlung geometrischer Maße eines Körpers unter Nutzung der erfindungsgemäßen Vorrichtung, wobei zur Anwendung des erfindungsgemäßen Verfahrens sowohl der Körper nebst Referenzteil als auch die Sensorik nebst Kompensationssensor dem Roboter bzw. Messarm oder Messausleger zugeordnet sein können.

In der industriellen Fertigung finden bereits seit vielen Jahren Roboter ihren Einsatz, bspw. in der Fahrzeugindustrie. U. a. werden Roboter, Manipulatoren oder ähnliche Maschinen mit angekoppelten Sensoren unterschiedlichster Technologie zur Ermittlung geometrischer Maße beliebiger Körper eingesetzt. Insbesondere bei Nutzung einer hoch auflösenden Sensorik ist es bislang erforderlich gewesen, in Bezug auf den Roboter einen enormen technischen Aufwand zu betreiben, um nämlich die Mechanik des Roboters der erforderlichen Präzision anzupassen. Dies ist äußerst aufwendig und gelingt nur bedingt.

Außerdem ist es bislang üblich, die Bewegungsbahnen des Roboters oder Roboterarms zur Bewegung der Sensorik über Software vorzugeben, wobei die Bewegungsbahn während des eigentlichen Messvorgangs festgelegt ist.

Auch ist es bereits bekannt, zur Definition von Bewegungsbahnen Kalibriermarken, vorzugsweise im unmittelbaren Umfeld von Messpunkten oder Messräumen, am Werkstück anzubringen, um die Messgenauigkeit des Roboters zu erhöhen. Besondere Kalibrierungen sind erforderlich. Lediglich beispielhaft sei dazu auf die DE 199 31 676 A1 verwiesen.

In der Praxis gibt es immer mehr Bedarf zur automatischen Vermessung von Körpern jedweder Art, insbesondere von produzierten Teilen, bspw. auch bei der sog. "L.osgröße 1 Technologie". Dabei gilt es Teile unbekannter Geometrie reproduzierbar und zuverlässig, möglichst automatisch, zu vermessen. Mit einer sog. 3D-Messung soll möglichst ein Standardroboter genutzt werden, der mit Hilfe von Wegsensoren und bildgebenden Verfahren die exakte Geometrie eines Körpers bestimmt, ohne diese zuvor auch nur annäherungsweise zu kennen.

In der DE 10 2008 006 927 A1 ist ein Korrektursystem für eine Positionssensoreinheit und ein Verfahren zur Korrektur eines Positionierungssystems gezeigt. Dabei wird die Korrektur eines Messsignals von der Positionssensoreinheit mit Korrekturwerten korrigiert. Die zugehörige Korrektureinrichtung korrigiert beispielsweise fehlerbehaftete Positionsabweichungen eines Sensors der Positionssensoreinheit. Die Positionssensoreinheit umfasst dabei mindestens einen Sensor und gibt ein Messsignal mit einer fehlerbehafteten Positionsinformation aus, das von der Korrektureinheit empfangen wird. Die Korrekturvorrichtung modifiziert das empfangene Messsignal durch Einarbeiten von mindestens einem Korrekturwert in die korrespondierende fehlerbehaftete Positionsinformation des empfangenen Messsignals und gibt ein modifiziertes Messsignal mit den korrigierten Positionsinformationen aus. Dabei werden die Korrekturwerte vorab und speziell für die vorgegebene Positionssensoreinheit ermittelt und in der Korrekturvorrichtung gespeichert. Die Messmittel zur Erfassung der Abweichungen sind dabei nicht Teil der Positionssensoreinheit. Aus der DE 10 2008 022 230 A1 ist weiter eine Vorrichtung zur Messung von Struktur und Form einer Prüflingsoberfläche bekannt geworden.

Ausgehend von dem bekannten Roboter und dem dabei genutzten Verfahren zur automatischen 3D-Vermessung liegt der Erfindung die Aufgabe zugrunde, sowohl den gattungsbildenden Roboter als auch das dabei genutzte Verfahren derart auszugestalten und weiterzubilden, dass insbesondere unter Nutzung eines Standardroboters, mit den dortigen Ungenauigkeiten im Bewegungsverlauf, ein hinreichend gutes Messergebnis erzielt werden kann, ohne einen weiteren Aufwand in Bezug auf eine präzisere Mechanik des Roboters betreiben zu müssen.

Voranstehende Aufgabe ist durch die Merkmale der nebengeordneten Patentansprüche 1 und 3 bezüglich des Roboters und durch die Merkmale der nebengeordneten Patentansprüche 11 und 12 bezüglich des erfindungsgemäßen Verfahrens gelöst.

Der erfindungsgemäße Roboter löst die voranstehende Aufgabe durch die Merkmale der nebengeordneten Patentansprüche 1 und 3.

In verfahrensmäßiger Hinsicht wird gemäß den nebengeordneten Patentansprüchen 11 und 12 ein erfindungsgemäßer Roboter genutzt, wobei vom Roboter entweder die Sensorik oder der zu vermessende Körper, ggf. nebst Referenzteil, getragen wird. Dies geschieht durch einen beweglichen Messarm, Messausleger oder dgl., wobei der Roboter entlang einer Bahn bewegt wird, wobei die Sensorik mindestens einen Messsensor und mindestens einen Kompensationssensor umfasst, wobei die Position des Kompensationssensors zum Messsensor als konstant oder bekannt vorausgesetzt wird und wobei der aus der ungenauen Roboterbewegung resultierende Messfehler des Messsensors iterativ korrigiert bzw. kompensiert wird.

Erfindungsgemäß ist erkannt worden, dass man zur automatischen 3D-Vermessung beliebiger Teile bzw. Körper, ungeachtet der bei einem Standardroboter auftretenden Ungenauigkeiten in der Bewegung, einen solchen Roboter ohne Weiteres verwenden kann, nämlich dann, wenn eine besondere Sensorik vorgesehen ist. Diese Sensorik umfasst mindestens einen Messsensor und mindestens einen Kompensationssensor. Die Position des Kompensationssensors zum Messsensor ist konstant oder - zu jedem Zeitpunkt - bekannt, da detektiert oder detektierbar. Diesbezügliche Einflüsse auf das Messergebnis lassen sich somit eliminieren.

Die Differenz zwischen einem Messergebnis des Kompensationssensors gegenüber einem Referenzteil oder gegenüber einem bereits vom Messsensor vermessenen Teil des Körpers und der bekannten Kontur des Referenzteils oder des bereits vom Messsensor vermessen Teils des Körpers wird als Ungenauigkeit der Roboterbewegung erkannt und dient zur Kompensation des aus der ungenauen Roboterbewegung resultierenden Messfehlers des Messsensors.

In erfindungsgemäßer Weise werden somit die Ungenauigkeiten in der Roboterbahn hingenommen. An Stelle eines konstruktiven Aufwandes in der Robotermechanik werden die Ungenauigkeiten der Roboterbewegung kompensiert, wird nämlich der aus der ungenauen Roboterbewegung resultierende Messfehler des Messsensors kompensiert, wozu der Kompensationssensor dient.

An dieser Stelle sei angemerkt, dass es hier grundsätzlich um die 3D-Vermessung beliebiger Körper geht. Entsprechend lassen sich jedwede Sensortypen verwenden, bspw. kontaktlose Wegsensoren. Der konkrete Sensortyp spielt eine nur untergeordnete Rolle.

Des Weiteren sei angemerkt, dass der erfindungsgemäße Roboter entweder den zu vermessenden Körper, ggf. nebst Referenzteil, oder die Sensorik trägt. Wesentlich ist hier eine Relativbewegung zwischen dem zu vermessenden Körper, ggf. nebst Referenzteil, und der Sensorik. Beide Möglichkeiten einer Anordnung sind denkbar.

Für den Fall, dass der Körper, ggf. nebst Referenzteil, vom Roboter bewegt wird, ist es von Vorteil, dass der Körper bzw. das Teil und das Referenzteil starr zueinander angeordnet bzw. miteinander verbunden sind. Ebenso ist es denkbar, dass das Referenzteil abseits des Körpers bzw. des zu vermessenden Teils angeordnet ist, wobei die Position des Referenzteils relativ zu dem zu vermessenden Teil dann bekannt sein muss.

In vorteilhafter Weise sind Messsensor und Kompensationssensor starr zueinander angeordnet bzw. fest miteinander verbunden. Auch ist es denkbar, dass der Messsensor und der Kompensationssensor mit Freiheitsgraden zueinander angeordnet bzw. miteinander verbunden sind. Dabei ist es von weiterem Vorteil, wenn mindestens ein weiterer Kompensationssensor vorgesehen ist, um die Lage des ersten Kompensationssensors zum Messsensor zu überwachen und etwaige Lageänderungen zu kompensieren. Der weitere Kompensationssensor kann an oder im Bereich der Kopplung zwischen dem Messsensor und dem Kompensationssensor angeordnet sein.

Der weitere Kompensationssensor dient zur Überprüfung der Lage von Messsensor zu dem ersten Kompensationssensor, um nämlich die Relativlage zu überwachen und Änderungen in der Relativlage zu kompensieren. Damit können die beiden Positionen bzw. kann die Lage des Messsensors zum Kompensationssensor als konstant angenommen werden.

Des Weiteren sei angemerkt, dass mehrere Mess- und Kompensationssensoren vorgesehen sein können, je nach Anforderung. Der grundsätzliche Aufbau der Sensorik bleibt jedoch insoweit erhalten, als ein Konzept der Kompensation von Messfehlern aufgrund einer ungenauen Roboterbewegung bzw. einer ungenauen Roboterbahn realisiert ist.

Wie bereits zuvor erwähnt, können die Sensoren einheitlich, bspw. als kontaktlos arbeitende Wegsensoren, ausgeführt sein. Außerdem erfolgt die Vermessung bzw. Auswertung unter Nutzung eines sog. bildgebenden Verfahrens auf übliche Weise.

Zur Anwendung des erfindungsgemäßen Verfahrens wird ein erfindungsgemäßer Roboter genutzt, wobei es entsprechend den voranstehenden Ausführungen um die Fehlerkompensation aufgrund der ungenauen Roboterbewegung geht. Dieser Fehler wird iterativ korrigiert bzw. kompensiert. Auch hier ist zu beachten, dass entweder die Sensorik oder der zu vermessende Körper bzw. das zu vermessende Teil und ggf. das Referenzteil durch den Roboter bewegt werden. Wesentlich ist die so definierte Relativbewegung zwischen den zu vermessenden Körpern und der Sensorik.

Nach dem erfindungsgemäßen Verfahren wird die zum Vermessen zumindest eines Teils des Körpers dienende Bahn (Roboterbahn) für die anfängliche Bewegung des die Sensorik tragenden Roboters vorgegeben oder berechnet, um nämlich das Verfahren zu beginnen. Die weitere bzw. nächste Bahn wird aus dem jeweils aktuellen Messergebnis der Geometrie berechnet.

Im Detail wird die Bahn des Roboters mittels Kompensationssensor überprüft. Ein Fehler wird anfänglich durch Vermessen eines Referenzobjektes ermittelt, wobei die Differenz zwischen der bekannten Kontur des Referenzobjekts und dem Messergebnis des Kompensationssensors die Ungenauigkeit des Roboterbahnverlaufs definiert.

Genauer gesagt wird die Differenz zwischen einem Messergebnis des Kompensationssensors gegenüber dem Referenzobjekt oder gegenüber einem bereits vermessen Teil und der bekannten Kontur des Referenzobjekts oder des bereits vermessen Teils als Ungenauigkeit der Roboterbewegung zur Kompensation des aus der ungenauen Roboterbewegung resultierenden Messfehlers des Messsensors verwendet, so dass letztendlich die aus der Ungenauigkeit der Roboterbewegung resultierenden Messfehler insgesamt kompensierbar sind. Somit dient der ermittelte Fehler im Ergebnis des Messsensors zur Eliminierung der Ungenauigkeit.

Bereits zuvor ist erwähnt worden, dass das Verfahren iterativ arbeitet. Entsprechend wird der Mess- und Kompensationsvorgang ggf. mehrmals wiederholt, wobei bei jeder Folgemessung das kompensierte Ergebnis des Messvorgangs aus dem vorangegangenen Schritt berücksichtigt wird.

Die Bahn für den Roboter wird aus der Extrapolation des kompensierten Ergebnisses unter Berücksichtigung der Messbereiche der verwendeten Sensoren ermittelt. Außerdem empfiehlt es sich, eine Kollisionsvermeidung zu berücksichtigen, wobei diese in der Berechnung der Roboterbahn berücksichtigt wird.

Die Bahn, die vom Roboter bzw. Roboterarm mit der Sensorik zurückgelegt wird, wird derart berechnet, dass bei jeder einzelnen Messung der Kompensationssensor näherungsweise den Teil/Bereich des Körpers eines vorangegangenen Messvorgangs misst und der Messsensor einen neuen, angrenzenden oder auch teilweise überlappenden Bereich des gleichen Körpers oder eines anderen Körpers misst. Die Messung des Kompensationssensors bzw. dessen Messergebnis dient zur Fehlerkorrektur.

Grundsätzlich ist es denkbar, dass die iterative Messung manuell beendet wird. Ebenso ist es denkbar, dass eine automatische Beendigung der iterativen Messung vorgesehen ist, nämlich dann, wenn die Veränderung des Messergebnisses einen vorgebbaren Wert unterschreitet. Dieser vorgebbare Wert könnte durch die Toleranz des Systems definiert sein.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 3 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel eines erfindungsgemäßen Roboters mit Sensorik,
- Fig. 2: den Gegenstand aus Fig. 1 in einer perspektivischen Ansicht,
- Fig. 3: in einer schematischen Prinzipskizze die grundsätzliche Anordnung der durch den Roboter getragenen Sensorik gegenüber einem Referenzobjekt und einem Messobjekt,
- Fig. 4: in einer schematischen Ansicht die grundsätzliche Anordnung einer weiteren Ausführungsform der durch den Roboter getragenen Sensorik gegenüber einem Messobjekt in unterschiedlichen Bereichen,
- Fig. 5: in einer schematischen Ansicht ein weiteres Ausführungsbeispiel der Erfindung, wobei die Messung mit einem Laser-Triangulationsscanner erfolgt und
- Fig. 6: in einer schematischen Ansicht eine erfindungsgemäße Anordnung, bei der das Messobjekt und das Referenzobjekt vom Roboter bewegt werden.

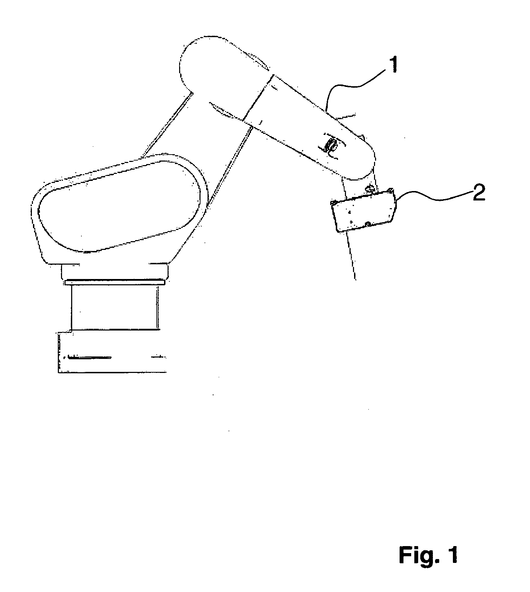

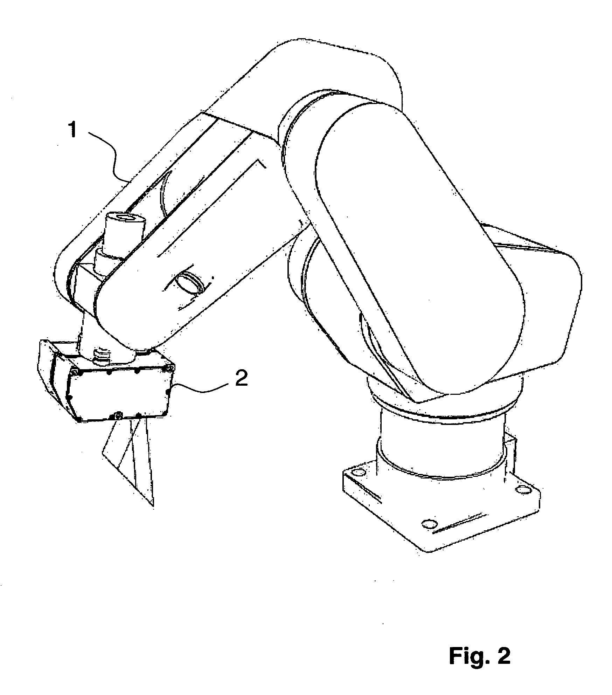

Die Fig. 1 und 2 zeigen einen erfindungsgemäßen Roboter zur automatischen 3D-Vermessung beliebiger Körper, wobei diese Körper in den Fig. 1 und 2 nicht gezeigt sind. Der Roboter umfasst einen Messarm 1, der die Sensorik 2 trägt.

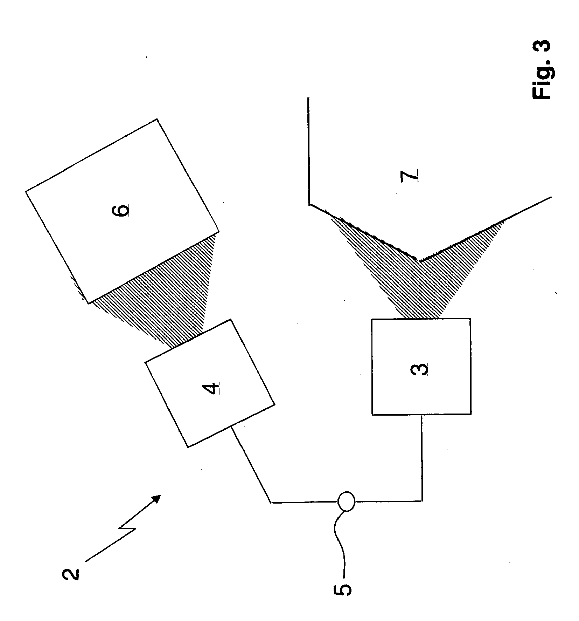

Fig. 3 zeigt in einer schematischen Ansicht die Sensorik 2, die einen Messsensor 3 sowie zwei Kompensationssensoren 4, 5 umfasst.

Der Messsensor 3 und der erste Kompensationssensor 4 sind mit Freiheitsgraden mechanisch miteinander gekoppelt, wobei im Bereich der Kopplung der zweite Kompensationssensor 5 angeordnet ist. In der nachfolgenden Beschreibung der Funktionsweise bzw. des Verfahrens sind die beiden Kompensationssensoren 4, 5 als Kompensationssensoren erster und zweiter Ordnung bezeichnet.

Fig. 3 zeigt des Weiteren, dass der erste Kompensationssensor 4 (Kompensationssensor erster Ordnung) gegen ein Referenzobjekt 6 misst. Der eigentliche Messsensor 3 misst gegen die Oberfläche des zu vermessenden Objekts 7.

Der zweite Kompensationssensor 5 (Kompensationssensor zweiter Ordnung) dient zur Überwachung der Lage des Messsensors 3 und des Kompensationssensors 4, um nämlich Abweichungen bzw. Veränderungen in der Lage der beiden Sensoren 3, 4 zueinander zu ermitteln und letztendliche zu kompensieren. Damit kann die Lage der beiden Sensoren 3, 4 zueinander als konstant angenommen werden.

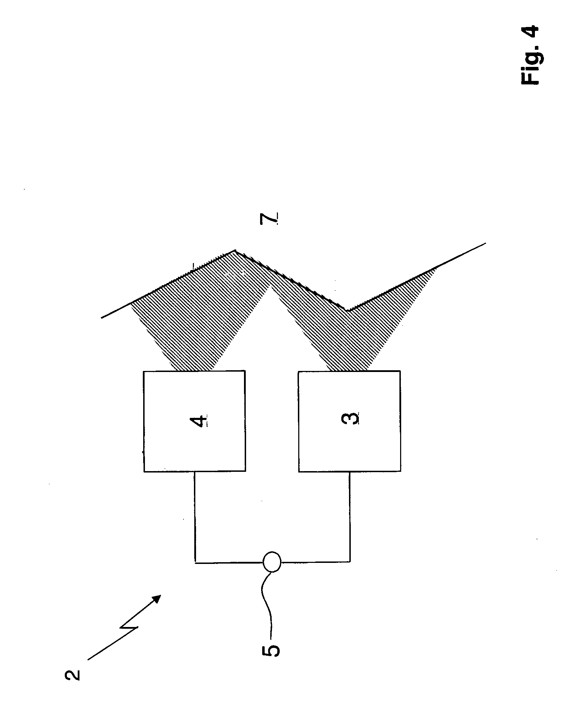

Fig. 4 zeigt in einer weiteren schematischen Anordnung die Sensorik 2, nämlich den Messsensor 3, den ersten Kompensationssensor 4 und den zweiten Kompensationssensor 3, wobei der Messsensor 3 und der Kompensationssensor 4 gegen die Oberfläche des zu vermessenden Objekts 7 misst. Der Kompensationssensor 4 vermisst dabei im Konkreten einen Bereich der Fläche des zu vermessenden Objekts 7, der zuvor bereits vom Messsensor 3 vermessen worden ist, so dass diesbezügliche Referenzwerte zum Vergleich und somit zur Erfassung des Fehlers, bedingt durch die Roboterbahn, existieren.

Bei dem der Erfindung zugrunde liegenden Konzept sind zwei wesentliche Gesichtspunkte von Bedeutung:
Der Roboter nutzt keine Bahnen, die bspw. von einem Programmierer vorgegeben sind. Vielmehr wird aus dem jeweils aktuellen Messergebnis der Geometrie die nächste Roboterbahn berechnet. Damit lassen sich Produkte bzw. Teile vermessen, die mit großer Varianz gefertigt werden. Es ist sogar eine automatische Vermessung möglich, auch für die sog. "Losgröße 1 Technologie".

Zur Kompensation des geometrischen Fehlers, der aufgrund der Ungenauigkeit des Roboters entsteht, verfügt das erfindungsgemäße System über einen zweiten oder gar über mehrere zusätzliche Sensoren, deren Position zum Messsensor bekannt ist oder konstant gehalten wird. Diese zusätzlichen Sensoren sind hier als Kompensationssensoren bezeichnet. Sie werden klassifiziert als Kompensationssensoren erster und zweiter Ordnung. Der Kompensationssensor zweiter Ordnung dient zur

Überwachung der Lage von Messsensor zu Kompensationssensor erster Ordnung und letztendlich zur Kompensierung etwaiger Abweichungen in der Lage. Folglich kann die Lage als konstant angenommen werden.

Die Funktion des Kompensationssensors erster Ordnung ist letztendlich verantwortlich für die Inspektion bzw. Vermessung in zwei Schritten:

Schritt 1:
Im ersten Schritt wird eine Bahn für den Roboter ermittelt, um einen ersten Teil des bzw. Bereich des geometrischen Objekts zu vermessen. Während dieses Messvorgangs überprüft der Kompensationssensor erster Ordnung die vorgegebene Bahn des Roboters, indem er ein geeignetes Referenzobjekt vermisst. Insoweit sei verwiesen auf Fig. 3.

Die Differenz zwischen der bekannten Kontur des Referenzobjekts und dem Messergebnis des Kompensationssensors entspricht der Ungenauigkeit des Roboterbahnverlaufs. Durch Berücksichtung dieses Resultats im Ergebnis des Messsensors kann diese Ungenauigkeit auf geeignete Weise eliminiert werden.

Schritt 2:
Für den zweiten Schritt liegt das kompensierte Ergebnis des vorangegangenen Vorgangs vor. Aus der Extrapolation dieses Ergebnisses wird automatisch eine Bahn für den Roboter unter Berücksichtung der Messbereiche der Sensoren, ggf. auch unter Berücksichtigung einer Kollisionsvermeidung, ermittelt. Diese Bahn ist so gestaltet, dass der Kompensationssensor erster Ordnung näherungsweise den Teil des Körpers des vorangegangenen Vorgangs und der Messsensor einen sich anschließenden bzw. angrenzenden oder aber auch teilweise überlappenden Bereich misst. Hierzu sei verwiesen auf Fig. 4.

Der Messvorgang ist beendet, wenn er manuell abgebrochen wird. Auch ist eine automatische Beendigung denkbar, bspw. dann, wenn Veränderungen des Ergebnisses nur noch marginal sind und/oder eine durch die Toleranz vorgegebenen Schranke unterschreiten.

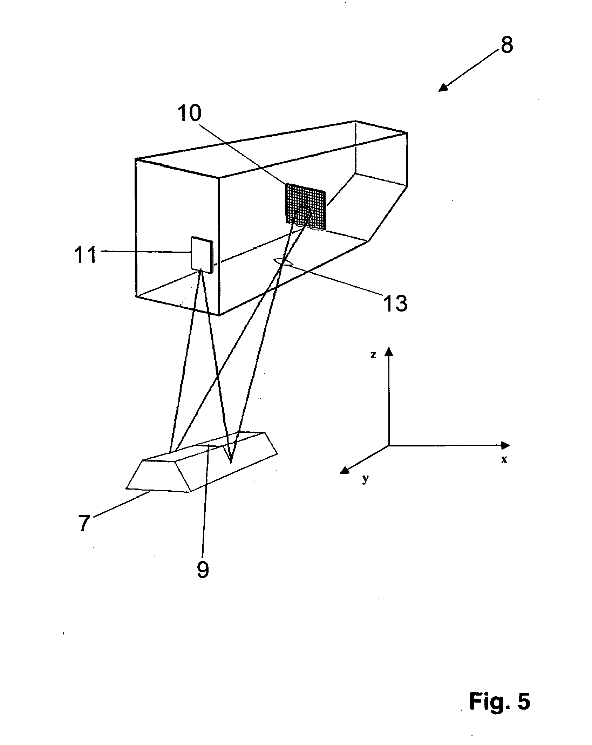

Unter Bezugnahme auf Figur 5 sei die Erfindung anhand einer Messung mittels Laser-Triangulationsscanner 8 erörtert. Im Konkreten lässt sich ein Laser-Triangulationsscanner 8 als Mess- und Kompensationssensor verwenden. Derartige Sensoren projizieren eine Laserzeile 9 auf das Messobjekt 7. Das Abbild der Laserzeile 9 wird auf eine Detektormatrix 10 abgebildet. Mittels des bekannten Triangulations-Prinzips kann daraus der Abstand des Messobjekts 7 entlang der Laserzeile 9 relativ zum Sensor bestimmt werden. Damit kann mit derartigen Sensoren eine hohe Messgenauigkeit in z- und in x-Richtung erreicht werden. Die Genauigkeit in z-Richtung ist sehr hoch, da diese Richtung aufgrund des Triangulations-Prinzips sehr genau bestimmt werden kann. Die Genauigkeit in x-Richtung ist ebenfalls hoch, da diese im Wesentlichen durch die Anzahl der Pixel des Empfängers im Sensor bestimmt ist. Derartige Scanner 8 erfassen jedoch Messwerte nur in 2 Richtungen (Dimensionen), so dass die 3. Richtung, in diesem Falle die y-Richtung, durch die Relativbewegung zwischen dem Messobjekt 7 und dem Sensor 8 erfasst wird.

Der Roboter bewegt das Messobjekt 7 derart am Sensor 8 vorbei, dass die Laserzeile 9 das Messobjekt 7 überstreicht. Aus der zeitlichen Abfolge von Messwerten in y-Richtung kann somit auch diese gemessen werden. Da jedoch die Roboterbahn die bereits erwähnten Ungenauigkeiten aufweist, muss diese kompensiert werden. Dazu wird beispielsweise die bekannte Geometrie des Referenzobjekts herangezogen. Durch das Vermessen der Spur entlang des Referenzobjekts und Aufnehmen der z-Werte kann bei geeigneter Gestalt des Referenzobjekts die Bewegung in y-Richtung erfasst werden.

Das Referenzobjekt muss derart ausgeführt sein, dass es mit dem Kompensationssensor in geeigneter Weise vermessen werden kann. Bei Verwendung von Weg- oder Abstandssensoren muss es beispielsweise eine bekannte Geometrie aufweisen, so dass bei der Vermessung des Referenzobjekts mit einem Weg- oder Positionssensor der tatsächliche Messwert ermittelt werden kann. Aus der Differenz des tatsächlichen Messwerts von der bekannten Geometrie des Referenzobjekts wird dann auf die Ungenauigkeit der Roboterbahn geschlossen.

Die Gestalt des Referenzobjekts könnte jedoch auch ein Muster in Form eines Farb-, Graustufen- oder Schwarz-Weiss-Kontrasts enthalten. Dies ist dann besonders vorteilhaft, wenn die Sensorik bildgebende Sensoren enthält. Weiterhin denkbar ist die Anordnung von lichtempfindlichen Detektoren auf dem Referenzobjekt. So könnte das Referenzobjekt beispielsweise neben der bekannten Geometrie noch Photodioden oder lichtempfindliche Zeilen, beispielsweise PSD-Zeilen, CCD-Zeilen oder CMOS-Zeilen enthalten. Diese lichtempfindlichen Detektoren erkennen einen Lichtstrahl, der auf sie fällt. Dies ist dann besonders vorteilhaft, wenn die Sensorik Sensoren enthält, die eine Positionsmessung mit Licht (oder allgemeiner elektromagnetischer Strahlung) durchführen. Bei Verwendung von Laser-Triangulationsscannern könnte beispielsweise das Referenzobjekt eine CCD-Zeile enthalten, die in Bewegungsrichtung des Roboters angeordnet ist. Wenn der Roboter die Sensorik am Messobjekt vorbeibewegt, in diesem Falle in y-Richtung, dann überstreicht die Laserlinie die Pixel der CCD-Zeile. Durch Auswertung des CCD-Zeilensignals kann dann die Position der Laserlinie entlang der Bewegungsrichtung detektiert werden, woraus die y-Position mit hoher Genauigkeit bestimmt werden kann. Diese genau Bestimmung der y-Richtung sowie die bereits erwähnte hohe Genauigkeit in z- und x-Richtung erlaubt es dann, die Ungenauigkeiten der Roboterbahn zu kompensieren.

Eine beliebige Kombination unterschiedlicher Merkmale ist bei der Ausgestaltung des Referenzobjekts denkbar, je nachdem, welche Sensorik zum Einsatz kommt.

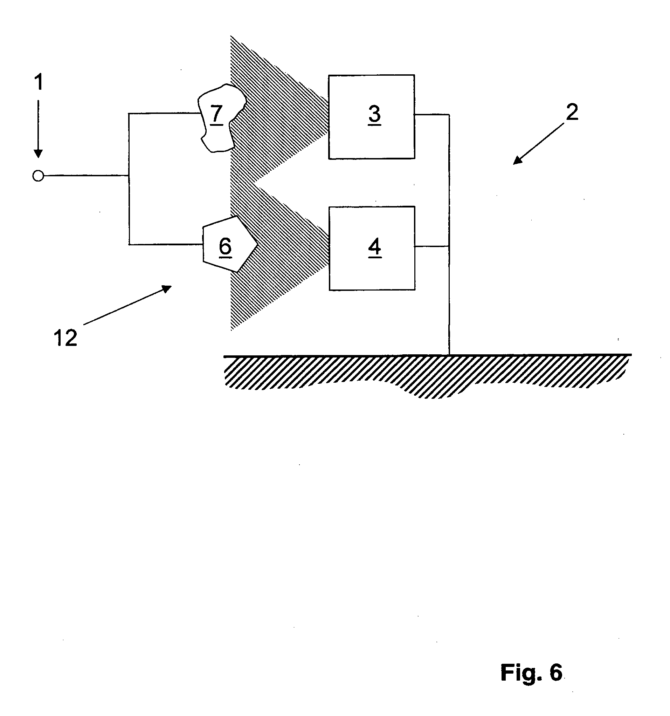

In weiter erfindungsgemäßer Weise ist erkannt worden, dass auch eine umgekehrte Anordnung/Funktion denkbar ist, wonach nämlich die Sensorik 2 nicht am Roboter 1 selbst angebracht ist. Insoweit sei verwiesen auf Figur 6. So lässt sich der Roboter 1 dazu verwenden, Objekte 7 zu bewegen, beispielsweise zu transportieren, aus Behältern zu entnehmen oder zu sortieren. Dazu wird das Objekt 7 vom Roboter 1, beispielsweise durch einen am Roboterarm angebrachten Greifer, gehalten. Diese Objekte 7 zu vermessen ist einfach möglich, indem der Roboter 1 das Objekt 7 an einer geeigneten Sensorik 2 vorbeibewegt. Die Sensorik 2 ist im Arbeitsbereich des Roboters 1 in definierter Position zum Roboter 1 angebracht. Dabei sind der Messsensor 3 und der Kompensationssensor 4 bzw. der Kompensationssensor 5 1. Ordnung fest zueinander in einer definierten Position angeordnet.

Alternativ könnte die Position von Messsensor und Kompensationssensor 1. Ordnung mit einem Kompensationssensor 2. Ordnung bestimmt werden. In jedem Falle ist aber die Position des Kompensationssensors 4 relativ zum Messsensor 3 bekannt oder bestimmbar.

Der Roboter 1 trägt mit seinem Greifer das Messobjekt 7. Gleichzeitig ist neben dem Greifer ein Referenzobjekt 6 bekannter Geometrie angebracht. Der Roboter 1 bewegt das Messobjekt 7 derart durch das Messfeld der Sensorik 2, dass das Referenzobjekt 6 und das Messobjekt 7 sich im Messfeld der Sensorik 2 bewegen.

Hinsichtlich weiterer vorteilhafter Ausgestaltungen des erfindungsgemäßen Roboters sowie des erfindungsgemäßen Verfahrens sei zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Messarm, Roboter
- 2: Sensorik
- 3: Messsensor
- 4: Kompensationssensor (erster Odrnung)
- 5: Kompensationssensor (zweiter Ordnung)
- 6: Referenzobjekt
- 7: zu vermessendes Objekt, Teil, Messobjekt
- 8: Laser-Triangulationsscanner, Scanner, Sensor
- 9: Laserzeile
- 10: Detektormatrix
- 11: Linienoptik
- 12: Bewegungsrichtung
- 13: Empfangsoptik

## Patentansprüche

1. Roboter zur automatischen 3D-Vermessung beliebiger Körper (7) und zur Ermittlung geometrischer Maße eines solchen Körpers (7),
mit einer Sensorik (2), wobei zur Bewegung des Körpers (7) relativ zu der Sensorik (2) der Roboter und/oder ein beweglicher Messarm oder Messausleger des Roboters, ausgestaltet ist, den zu vermessenden Körper (7) zu tragen und eine Bahn zu beschreiben,
und wobei die Sensorik eine Kompensationseinrichtung, mindestens einen Messsensor (3) und mindestens einen Kompensationssensor (4) umfasst,
wobei die Position des Kompensationssensors (4) zum Messsensor (3) konstant oder bekannt ist,
und wobei die Kompensationseinrichtung geeignet ist, eine Ungenauigkeit der Roboterbewegung zu ermitteln, um den aus der ungenauen Roboterbewegung resultierenden Messfehler des Messsensors (3) zu kompensieren,
wobei die Ungenauigkeit der Roboterbewegung
- als Differenz zwischen einem Messergebnis des Kompensationssensors (4) gegenüber einem Referenzteil (6) und der bekannten Kontur des Referenzteils (6) definiert ist, oder,
- als Differenz zwischen einem Messergebnis des Kompensationssensors (4) gegenüber einem bereits vom Messsensor (3) vermessenen Teil des Körpers (7) und der bekannten Kontur des bereits vom Messsensor (3) vermessenen Teils des Körpers (7) definiert ist,
und wobei die Kompensationseinrichtung derart ausgebildet ist, dass diese einen aus einer ungenauen Roboterbewegung resultierenden Messfehler im Messergebnis des Messsensors iterativ kompensiert,
und wobei die Kompensationseinrichtung ausgebildet ist, die Bahn für den Roboter aus der Extrapolation des kompensierten Messergebnisses des Messsensors (3) unter Berücksichtigung der Messbereiche der Sensoren (3, 4) zu ermitteln.

2. Roboter nach Anspruch 1, wobei der Körper (7) und das Referenzteil (6) starr zueinander angeordnet bzw. miteinander verbunden sind oder dass die Position des Referenzteils (6) relativ zum Körper (7) bekannt ist.

3. Roboter zur automatischen 3D-Vermessung beliebiger Körper und zur Ermittlung geometrischer Maße eines solchen Körpers (7),
mit einer vom Roboter getragenen Sensorik (2), wobei zur Bewegung der Sensorik (2) relativ zu dem Körper (7) der Roboter und/oder ein beweglicher Messarm (1) oder Messausleger des Roboters ausgestaltet ist, die Sensorik (2) zu tragen und eine Bahn zu beschreiben, und wobei die Sensorik (2) eine Kompensationseinrichtung, mindestens einen Messsensor (3) und mindestens einen Kompensationssensor (4) umfasst,
wobei die Position des Kompensationssensors (4) zum Messsensor (3) konstant oder bekannt ist, und
wobei die Kompensationseinrichtung geeignet ist, eine Ungenauigkeit der Roboterbewegung zu ermitteln, um den aus der ungenauen Roboterbewegung resultierenden Messfehler des Messsensors (3) zu kompensieren,
wobei die Ungenauigkeit der Roboterbewegung
- als Differenz zwischen einem Messergebnis des Kompensationssensors (4) gegenüber einem Referenzteil (6) und der bekannten Kontur des Referenzteils (6) definiert ist oder
- als Differenz zwischen einem Messergebnis des Kompensationssensors (4) gegenüber einem bereits vom Messsensor (3) vermessenen Teil des Körpers (7) und der bekannten Kontur des bereits vom Messsensor (3) vermessenen Teil des Körpers (7) definiert ist,
und wobei die Kompensationseinrichtung derart ausgebildet ist, dass diese einen aus einer ungenauen Roboterbewegung resultierenden Messfehler im Messergebnis des Messsensors iterativ kompensiert,
und wobei die Kompensationseinrichtung ausgebildet ist, die Bahn für den Roboter aus der Extrapolation des kompensierten Messergebnisses des Messsensors (3) unter Berücksichtigung der Messbereiche der Sensoren (3, 4) zu ermitteln.

4. Roboter nach einem der Ansprüche 1 bis 3, wobei der Messsensor (3) und der Kompensationssensor (4) starr zueinander angeordnet bzw. miteinander verbunden sind.

5. Roboter nach Anspruch 1 bis 4, wobei der Messsensor (3) und der Kompensationssensor (4) mit Freiheitsgraden zueinander angeordnet bzw. miteinander verbunden sind.

6. Roboter nach einem der Ansprüche 1-5, wobei mindestens ein weiterer Kompensationssensor (5) vorgesehen ist, um die Lage des ersten Kompensationssensors (4) zum Messsensor (3) zu überwachen und etwaige Lageänderungen zu kompensieren.

7. Roboter nach einem der Ansprüche 3 bis 6, wobei der weitere Kompensationssensor (5) an oder im Bereich der Kopplung zwischen dem Messsensor (3) und dem Kompensationssensor (4) angeordnet ist.

8. Roboter nach einem der Ansprüche 1 bis 7, wobei mehrere Mess- und Kompensationssensoren (3, 4, 5) vorgesehen sind.

9. Roboter nach einem der Ansprüche 1 bis 8, wobei die Mess- und Kompensationssensoren (3, 4, 5) als kontaktlos arbeitende Wegsensoren ausgeführt sind.

10. Roboter nach einem der Ansprüche 1 bis 9, wobei die Vermessung bzw. Auswertung unter Nutzung eines bildgebenden Verfahrens erfolgt.

11. Verfahren zur automatischen 3D-Vermessung beliebiger Körper (7) mittels Roboter und zur Ermittlung geometrischer Maße eines solchen Körpers (7) unter Nutzung einer Vorrichtung nach einem der Ansprüche 1 bis 10,
wobei eine vom Roboter getragene Sensorik (2) relativ zu dem zu vermessenden Körper (7), vorzugsweise durch einen beweglichen Messarm (1) oder Messausleger des Roboters, entlang einer Bahn bewegt wird,
wobei die Sensorik (2) mindestens einen Messsensor (3) und mindestens ein Kompensationssensor (4) umfasst, wobei die Position des Kompensationssensors (4) zum Messsensor (3) als konstant oder bekannt vorausgesetzt wird und
wobei eine Ungenauigkeit der Roboterbewegung ermittelt wird, wobei die Ungenauigkeit der Roboterbewegung
- als Differenz zwischen einem Messergebnis des Kompensationssensors (4) gegenüber einem Referenzteil (6) und der bekannten Kontur des Referenzteils (6) definiert ist oder
- als Differenz zwischen einem Messergebnis des Kompensationssensors (4) gegenüber einem bereits vom Messsensor (3) vermessenen Teil des Körpers (7) und der bekannten Kontur des bereits vom Messsensor (3) vermessenen Teils des Körpers (7) definiert ist,
um den aus der ungenauen Roboterbewegung resultierenden Messfehler im Messergebnis des Messsensors (3) iterativ zu korrigieren bzw. zu kompensieren und wobei die Bahn für den Roboter aus der Extrapolation des kompensierten Messergebnisses des Messsensors (3) unter Berücksichtigung der Messbereiche der Sensoren (3, 4) ermittelt wird.

12. Verfahren zur automatischen 3D-Vermessung beliebiger Körper (7) mittels Roboter und zur Ermittlung geometrischer Maße eines solchen Körpers (7) unter Nutzung einer Vorrichtung nach einem der Ansprüche 1 bis 10,
wobei der vom Roboter getragene zu vermessende Körper (7), gegebenenfalls nebst Referenzkörper (6), relativ zu der Sensorik (2), vorzugsweise durch einen beweglichen Messarm (1) oder Messausleger des Roboters, entlang einer Bahn bewegt wird,
wobei die Sensorik (2) mindestens einen Messsensor (3) und mindestens ein Kompensationssensor (4) umfasst, wobei die Position des Kompensationssensors (4) zum Messsensor (3) als konstant oder bekannt vorausgesetzt wird und
wobei eine Ungenauigkeit der Roboterbewegung ermittelt wird, wobei die Ungenauigkeit der Roboterbewegung
- als Differenz zwischen einem Messergebnis des Kompensationssensors (4) gegenüber einem Referenzteil (6) und der bekannten Kontur des Referenzteils (6) definiert ist oder
- als Differenz zwischen einem Messergebnis des Kompensationssensors (4) gegenüber einem bereits vom Messsensor (3) vermessenen Teil des Körpers (7) und der bekannten Kontur des bereits vom Messsensor (3) vermessenen Teils des Körpers (7) definiert ist,
um den aus der ungenauen Roboterbewegung resultierenden Messfehler des Messsensors (3) iterativ zu korrigieren bzw. zu kompensieren und wobei die Bahn für den Roboter aus der Extrapolation des kompensierten Messergebnisses des Messsensors (3) unter Berücksichtigung der Messbereiche der Sensoren (3, 4) ermittelt wird.

13. Verfahren nach Anspruch 11 oder 12, wobei die zum Vermessen zumindest eines Teils des Körpers (7) dienende Bahn für die anfängliche Bewegung des die Sensorik (2) oder den Körper (7) tragenden Roboters vorgegeben oder berechnet wird.

14. Verfahren nach Anspruch 13, wobei eine Bahnänderung aus dem jeweils aktuellen Messergebnis der Geometrie berechnet wird.

15. Verfahren nach einem der Ansprüche 11 bis 14,
wobei die Bahn des Roboters mittels des Kompensationssensors (4) überprüft und ein Fehler durch Vermessen eines Referenzkörpers (6) ermittelt wird, wobei die Differenz zwischen der bekannten Kontur des Referenzkörpers (6) und dem Messergebnis des Kompensationssensors (4) die Ungenauigkeit des Roboterbahnverlaufs definiert, insbesondere wobei die Differenz zwischen einem Messergebnis des Kompensationssensors gegenüber dem Referenzobjekt oder gegenüber einem bereits vermessenen Teil und der bekannten Kontur des Referenzobjekts oder des bereits vermessenen Teils als Ungenauigkeit der Roboterbewegung zur Kompensation des aus der ungenauen Roboterbewegung resultierenden Messfehlers des Messsensors verwendet wird, wobei der ermittelte Fehler im Ergebnis des Messsensors zur Eliminierung der Ungenauigkeit dient.

## Claims

1. Robot for automatic 3D measurement of any members (7) and for establishing geometric dimensions of such a member (7), having a sensor system (2), the robot and/or a movable measuring arm or measurement extension arm of the robot being configured to carry the member (7) to be measured and to describe a path in order to move the member (7) relative to the sensor system (2),
and the sensor system comprising a compensation device, at least one measurement sensor (3) and at least one compensation sensor (4),
the position of the compensation sensor (4) relative to the measurement sensor (3) being constant or known,
and the compensation device being suitable for establishing imprecision of the robot movement in order to compensate for the measurement error of the measurement sensor (3) resulting from the imprecise robot movement,
the imprecision of the robot movement
- being defined as the difference between a measurement result of the compensation sensor (4) with respect to a reference member (6) and the known contour of the reference member (6), or
- being defined as the difference between a measurement result of the compensation sensor (4) with respect to a portion of the member (7) that has already been measured by the measurement sensor (3) and the known contour of the portion of the member (7) that has already been measured by the measurement sensor (3),
and the compensation device being constructed in such a manner that it compensates for a measurement error resulting from an imprecise robot movement in the measurement result of the measurement sensor in an iterative manner,
from an imprecise robot movement in the measurement result of the measurement sensor in an iterative manner,
and the compensation device being constructed to establish the path for the robot from the extrapolation of the compensated measurement result of the measurement sensor (3) taking into account the measurement ranges of the sensors (3, 4).

2. Robot according to claim 1, wherein the member (7) and the reference member (6) are arranged in a rigid manner relative to each other or are connected to each other or in that the position of the reference member (6) relative to the member (7) is known.

3. Robot for automatic 3D measurement of any members and for establishing geometric dimensions of such a member (7), having a sensor system (2) which is carried by the robot, the robot and/or a movable measuring arm (1) or measurement extension arm of the robot being configured to carry the sensor system (2) and to describe a path in order to move the sensor system (2) relative to the member (7),
and the sensor system (2) comprising a compensation device, at least one measurement sensor (3) and at least one compensation sensor (4),
the position of the compensation sensor (4) relative to the measurement sensor (3) being constant or known, and
the compensation device being suitable for establishing imprecision of the robot movement in order to compensate for the measurement error of the measurement sensor (3) resulting from the imprecise robot movement,
the imprecision of the robot movement
- being defined as the difference between a measurement result of the compensation sensor (4) with respect to a reference member (6) and the known contour of the reference member (6), or
- being defined as the difference between a measurement result of the compensation sensor (4) with respect to a portion of the member (7) that has already been measured by the measurement sensor (3) and the known contour of the portion of the member (7) that has already been measured by the measurement sensor (3),
and the compensation device being constructed in such a manner that it compensates for a measurement error resulting from an imprecise robot movement in the measurement result of the measurement sensor in an iterative manner,
and the compensation device being constructed to establish the path for the robot from the extrapolation of the compensated measurement result of the measurement sensor (3) taking into account the measurement ranges of the sensors (3, 4) .

4. Robot according to any one of claims 1 to 3, wherein the measurement sensor (3) and the compensation sensor (4) are arranged in a rigid manner relative to each other or are connected to each other.

5. Robot according to claims 1 to 4, wherein the measurement sensor (3) and the compensation sensor (4) are arranged with degrees of freedom with respect to each other or are connected to each other.

6. Robot according to any one of claims 1 to 5, wherein at least one additional compensation sensor (5) is provided in order to monitor the position of the first compensation sensor (4) with respect to the measurement sensor (3) and to compensate for any position changes.

7. Robot according to any one of claims 3 to 6, wherein the additional compensation sensor (5) is arranged on or in the region of the coupling between the measurement sensor (3) and the compensation sensor (4).

8. Robot according to any one of claims 1 to 7, wherein a plurality of measurement and compensation sensors (3, 4, 5) are provided.

9. Robot according to any one of claims 1 to 8, wherein the measurement and compensation sensors (3, 4, 5) are constructed as displacement sensors which operate in a contactless manner.

10. Robot according to any one of claims 1 to 9, wherein the measurement or evaluation is carried out using an imaging method.

11. Method for automatic 3D measurement of any members (7) by means of a robot and for establishing geometric dimensions of such a member (7) using a device according to any one of claims 1 to 10,
wherein a sensor system (2) which is carried by the robot is moved along a path relative to the member (7) to be measured, preferably by means of a movable measurement arm (1) or measurement extension arm of the robot,
the sensor system (2) comprising at least one measurement sensor (3) and at least one compensation sensor (4), the position of the compensation sensor (4) relative to the measurement sensor (3) being required to be constant or known, and an imprecision of the robot movement being established, the imprecision of the robot movement
- being defined as the difference between a measurement result of the compensation sensor (4) with respect to a reference member (6) and the known contour of the reference member (6), or
- being defined as the difference between a measurement result of the compensation sensor (4) with respect to a portion of the member (7) that has already been measured by the measurement sensor (3) and the known contour of the portion of the member (7) that has already been measured by the measurement sensor (3)
in order to correct or to compensate for the measurement error resulting from the imprecise robot movement in the measurement result of the measurement sensor (3) in an iterative manner,
and the path for the robot being established from the extrapolation of the compensated measurement result of the measurement sensor (3) taking into account the measurement ranges of the sensors (3, 4).

12. Method for automatic 3D measurement of any members (7) by means of a robot and for establishing geometric dimensions of such a member (7) using a device according to any one of claims 1 to 10,
wherein the member (7) which is carried by the robot and is intended to be measured, optionally including the reference member (6), is moved along a path relative to the sensor system (2), preferably by means of a movable measurement arm (1) or measurement extension arm of the robot,
the sensor system (2) comprising at least one measurement sensor (3) and at least one compensation sensor (4), the position of the compensation sensor (4) relative to the measurement sensor (3) being required to be constant or known, and an imprecision of the robot movement being established, the imprecision of the robot movement
- being defined as the difference between a measurement result of the compensation sensor (4) with respect to a reference member (6) and the known contour of the reference member (6), or
- being defined as the difference between a measurement result of the compensation sensor (4) with respect to a portion of the member (7) that has already been measured by the measurement sensor (3) and the known contour of the portion of the member (7) that has already been measured by the measurement sensor (3)
in order to correct or to compensate for the measurement error of the measurement sensor (3) resulting from the imprecise robot movement in an iterative manner,
and the path for the robot being established from the extrapolation of the compensated measurement result of the measurement sensor (3) taking into account the measurement ranges of the sensors (3, 4).

13. Method according to claim 11 or 12, wherein the path which is used to measure at least a portion of the member (7) is predetermined or calculated for the initial movement of the robot carrying the sensor system (2) or the member (7).

14. Method according to claim 13, wherein a path change is calculated from the current measurement result of the geometry.

15. Method according to any one of claims 11 to 14, wherein the path of the robot is verified by means of the compensation sensor (4) and an error is established by measuring a reference member (6), the difference between the known contour of the reference member (6) and the measurement result of the compensation sensor (4) defining the imprecision of the robot path progression, in particular with the difference between a measurement result of the compensation sensor with respect to the reference object or with respect to an already measured portion and the known contour of the reference object or the already measured portion being used as an imprecision of the robot movement to compensate for the measurement error of the measurement sensor resulting from the imprecise robot movement, the established error in the result of the measurement sensor being used to eliminate the imprecision.

## Revendications

1. Robot permettant 1a mesure tridimensionnelle automatique de corps (7) quelconques et permettant de déterminer les dimensions géométriques d'un tel corps (7),
comportant un système de détection (2), et en vue du déplacement du corps (7) par rapport au système de détection (2), le robot et/ou un bras de mesure ou un avant-bras de mesure mobiles du robot étant configurés pour porter le corps (7) à mesurer et pour décrire une trajectoire,
et ledit système de détection comportant un dispositif de compensation, au moins un capteur de mesure (3) et au moins un capteur de compensation (4),
la position du capteur de compensation (4) par rapport au capteur de mesure (3) étant constante ou connue,
et le dispositif de compensation étant apte à déterminer une inexactitude du mouvement du robot, afin de compenser l'erreur de mesure du capteur de mesure (3) résultant du mouvement inexact du robot,
l'inexactitude du mouvement du robot étant définie
- comme la différence entre un résultat de mesure du capteur de compensation (4) par rapport à une partie de référence (6) et par rapport au contour connu de la partie de référence (6), ou
- comme la différence entre un résultat de mesure du capteur de compensation (4) par rapport à une partie du corps (7) déjà mesurée par le capteur de mesure (3) et par rapport au contour connu de la partie du corps (7) déjà mesurée par le capteur de mesure (3),
et le dispositif de compensation étant configuré de telle sorte que celui-ci compense de manière itérative une erreur de mesure, résultant d'un mouvement inexact du robot, dans le résultat de mesure du capteur de mesure,
et le dispositif de compensation étant configuré pour déterminer la trajectoire du robot à partir de l'extrapolation du résultat de mesure compensé du capteur de mesure (3) en tenant compte des zones de mesure des capteurs (3, 4).

2. Robot selon la revendication 1, dans lequel le corps (7) et la partie de référence (6) sont disposés l'un par rapport à l'autre ou sont reliés l'un à l'autre de manière fixe ou en ce que la position de la partie de référence (6) par rapport au corps (7) est connue.

3. Robot permettant la mesure tridimensionnelle automatique de corps quelconques et permettant de déterminer les dimensions géométriques d'un tel corps (7),
comportant un système de détection (2) porté par le robot, et en vue du déplacement du système de détection (2) par rapport au corps (7), le robot et/ou un bras de mesure ou un avant-bras de mesure (1) mobiles du robot étant configurés pour porter le système de détection (2) et pour décrire une trajectoire, et ledit système de détection (2) comportant un dispositif de compensation, au moins un capteur de mesure (3) et au moins un capteur de compensation (4),
la position du capteur de compensation (4) par rapport au capteur de mesure (3) étant constante ou connue, et
le dispositif de compensation étant apte à déterminer une inexactitude du mouvement du robot, afin de compenser l'erreur de mesure du capteur de mesure (3) résultant du mouvement inexact du robot,
l'inexactitude du mouvement du robot étant définie
- comme la différence entre un résultat de mesure du capteur de compensation (4) par rapport à une partie de référence (6) et par rapport au contour connu de la partie de référence (6), ou
- comme la différence entre un résultat de mesure du capteur de compensation (4) par rapport à une partie du corps (7) déjà mesurée par le capteur de mesure (3) et par rapport au contour connu de la partie du corps (7) déjà mesurée par le capteur de mesure (3),
et le dispositif de compensation étant configuré de telle sorte que celui-ci compense de manière itérative une erreur de mesure, résultant d'un mouvement inexact du robot, dans le résultat de mesure du capteur de mesure
et le dispositif de compensation étant configuré pour déterminer la trajectoire du robot à partir de l'extrapolation du résultat de mesure compensé du capteur de mesure (3) en tenant compte des zones de mesure des capteurs (3, 4).

4. Robot selon l'une quelconque des revendications 1 cri 3, dans lequel le capteur de mesure (3) et le capteur de compensation (4) sont disposés l'un par rapport à l'autre ou sont reliés l'un à l'autre de manière fixe.

5. Robot selon l'une quelconque des revendications 1 à 4, dans lequel le capteur de mesure (3) et le capteur de compensation (4) sont disposés l'un par rapport à l'autre ou sont reliés l'un à l'autre avec des degrés de liberté.

6. Robot selon l'une quelconque des revendications 1 à 5, dans lequel il est prévu au moins un capteur de compensation (5) supplémentaire, afin de contrôler la position du premier capteur de compensation (4) par rapport au capteur de mesure (3) et de compenser d'éventuelles variations de position.

7. Robot selon l'une quelconque des revendications 3 à 6, dans lequel le capteur de compensation (5) supplémentaire est disposé sur ou dans La zone de couplage entre le capteur de mesure (3) et le capteur de compensation (4).

8. Robot selon l'une quelconque des revendications 1 à 7, dans lequel sont prévus plusieurs capteurs de mesure et capteurs de compensation (3, 4, 5).

9. Robot selon l'une quelconque des revendications 1 à 8, dans lequel les capteurs de mesure et capteurs de compensation (3, 4, 5) sont configurés sous forme de capteurs de déplacement travaillant sans contact.

10. Robot selon l'une quelconque des revendications 1 à 9, dans lequel la mesure ou l'analyse est effectuée moyennant l'utilisation d'un procédé d'imagerie.

11. Procédé permettant la mesure tridimensionnelle automatique de corps (7) quelconques au moyen de robots et permettant de déterminer les dimensions géométriques d'un tel corps (7) moyennant l'utilisation d'un dispositif selon l'une quelconque des revendications 1 à 10,
un système de détection (2) porté par le robot étant déplacé par rapport au corps (7) à mesurer, de préférence par un bras de mesure (1) ou un avant-bras de mesure mobiles du robot, le long d'une trajectoire,
ledit système de détection (2) comportant au moins un capteur de mesure (3) et au moins un capteur de compensation (4), la position du capteur de compensation (4) par rapport au capteur de mesure (3) étant supposée constante ou connue, et
une inexactitude du mouvement du robot étant déterminée, l'inexactitude du mouvement du robot étant définie
- comme la différence entre un résultat de mesure du capteur de compensation (4) par rapport à une partie de référence (6) et par rapport au contour connu de la partie de référence (6), ou
- comme la différence entre un résultat de mesure du capteur de compensation (4) par rapport à une partie du corps (7) déjà mesurée par le capteur de mesure (3) et par rapport au contour connu de la partie du corps (7) déjà mesurée par le capteur de mesure (3),
afin de corriger ou de compenser de manière itérative une erreur de mesure, résultant du mouvement inexact du robot, dans le résultat de mesure du capteur de mesure, et la trajectoire du robot étant déterminée à partir de l'extrapolation du résultat de mesure compensé du capteur de mesure (3) en tenant compte des zones de mesure des capteurs (3, 4).

12. Procédé permettant la mesure tridimensionnelle automatique de corps (7) quelconques au moyen de robots et permettant de déterminer les dimensions géométriques d'un tel corps (7) moyennant l'utilisation d'un dispositif selon l'une quelconque des revendications 1 à 10,
ledit corps (7) à mesurer, porté par le robot, le cas échéant y compris le corps de référence (6), étant déplacé par rapport au système de détection (2), de préférence par un bras de mesure (1) ou un avant-bras de mesure mobiles du robot, le long d'une trajectoire,
ledit système de détection (2) comportant au moins un capteur de mesure (3) et au moins un capteur de compensation (4), la position du capteur de compensation (4) par rapport au capteur de mesure (3) étant supposée constante ou connue, et
une inexactitude du mouvement du robot étant déterminée, l'inexactitude du mouvement du robot étant définie
- comme la différence entre un résultat de mesure du capteur de compensation (4) par rapport à une partie de référence (6) et par rapport au contour connu de la partie de référence (6), ou
- comme la différence entre un résultat de mesure du capteur de compensation (4) par rapport à une partie du corps (7) déjà mesurée par le capteur de mesure (3) et par rapport au contour connu de la partie du corps (7) déjà mesurée par le capteur de mesure (3),
afin de corriger ou de compenser de manière itérative l'erreur de mesure du capteur de mesure (3) résultant du mouvement inexact du robot, et la trajectoire du robot étant déterminée à partir de l'extrapolation du résultat de mesure compensé du capteur de mesure (3) en tenant compte des zones de mesure des capteurs (3, 4).

13. Procédé selon la revendication 11 ou 12, dans lequel la trajectoire utilisée pour mesurer au moins une partie du corps (7) est prédéfinie ou calculée pour le mouvement initial du robot portant le système de détection (2) ou le corps (7).

14. Procédé selon la revendication 13, dans lequel une variation de la trajectoire est calculée à partir du résultat de mesure de la géométrie, actuel dans chaque cas.

15. Procédé selon l'une quelconque des revendications 11 à 14, dans lequel la trajectoire du robot est contrôlée par le capteur de compensation (4) et une erreur est déterminée par la mesure d'un corps de référence (6), la différence entre le contour connu du corps de référence (6) et le résultat de mesure du capteur de compensation (4) définissant l'inexactitude du tracé de la trajectoire du robot, en particulier la différence entre un résultat de mesure du capteur de compensation par rapport à l'objet de référence ou par rapport à une partie déjà mesurée et le contour connu de l'objet de référence ou de la partie déjà mesurée étant utilisée comme inexactitude du mouvement du robot en vue de la compensation de l'erreur de mesure du capteur de mesure résultant du mouvement inexact du robot, l'erreur déterminée dans le résultat du capteur de mesure étant utilisée pour éliminer l'inexactitude.
